# EUROPÄISCHE PATENTSCHRIFT

(11) **EP 3 155 470 B1**
(45) Veröffentlichungstag und Bekanntmachung des Hinweises auf die Patenterteilung: **17.10.2018**
(21) Anmeldenummer: 15730741.4
(22) Anmeldetag: 15.06.2015
(51) Int. Cl.: G02B 27/01

(54) **POSITIONIEREINRICHTUNG FÜR EINE COMBINERSCHEIBE EINER HEAD-UP-ANZEIGE EINES FAHRZEUGS**
POSITIONING DEVICE FOR A COMBINER PLATE OF A HEAD-UP DISPLAY OF A VEHICLE
DISPOSITIF DE POSITIONNEMENT POUR UNE VITRE DE COMBINEUR D'UN AFFICHAGE TÊTE HAUTE D'UN VÉHICULE

(30) Priorität: 16.06.2014 DE 102014211485
(43) Veröffentlichungstag der Anmeldung: 19.04.2017
(73) Patentinhaber: Continental Automotive GmbH, 30165 Hannover (DE)
(72) Erfinder: KISSEL, Robert Wolfgang, 63329 Egelsbach (DE); CHALHOUB, Elias, 64293 Darmstadt (DE)
(86) Internationale Anmeldenummer: PCT/EP2015/063376
(87) Internationale Veröffentlichungsnummer: WO 2015/193259

(56) Entgegenhaltungen:
- EP-A2- 2 477 058
- WO-A2-2008/063632
- FR-A1- 2 983 314
- JP-A- 2004 126 450
- JP-A- 2007 182 132
- US-A1- 2013 100 535

## Beschreibung

Die Erfindung bezieht sich auf eine Positioniereinrichtung für eine Combinerscheibe einer Head-Up-Anzeige eines Fahrzeugs, mit einem reversierbaren Drehantrieb, von dem eine Combinerkinematik antreibbar ist, durch die die Combinerscheibe zwischen einer Ruheposition in einem Gehäuse und einer aus einer Öffnung des Gehäuses herausragenden Arbeitsposition bewegbar antreibbar ist, wobei in der Arbeitsposition Strahlengänge von einer bildgebenden Einheit und einem Optikmodul im Gehäuse auf die Combinerscheibe zu führen.

Bei einer Head-Up-Anzeige mit einer derartigen Positioniereinrichtung für eine Combinerscheibe wird das virtuelle Bild mittels der optisch wirksamen Combinerscheibe erzeugt, die vorzugsweise vor dem Fahrer zwischen Windschutzscheibe und Armaturenbrett positioniert ist. Diese Combinerscheibe muss in die Ruheposition einfahrbar sein, um Beschädigungen vorzubeugen und um sie bei deaktivierter Head-Up-Anzeige aus dem Sichtbereich des Fahrers zu bewegen.

Aus der FR 2,983,314 ist eine Head-Up-Anzeige gemäß Oberbegriff des Anspruch 1 bekannt. Eine weitere Head-Up-Anzeige ist aus der JP 2007 182132 A bekannt.

Aufgabe der Erfindung ist es, eine Positioniereinrichtung für eine Combinerscheibe der eingangs genannten Art zu schaffen, die bei einfachem und Bauraum sparendem Aufbau einen erhöhten Schutz der in Ruheposition befindlichen Combinerscheibe gegen Beschädigungen ermöglicht.

Diese Aufgabe wird erfindungsgemäß durch die kennzeichnenden Merkmale des Anspruch 1 gelöst.Dabei ragt die Combinerkinematik in der Ruheposition der Combinerscheibe in den Bereich der Strahlengänge zwischen dem Optikmodul und der Combinerscheibe und ist in der Arbeitsposition aus dem Bereich der Strahlengänge herausbewegt.

In ihrer Ruheposition ist die Combinerscheibe im Gehäuse gegen Beschädigungen geschützt. Da die Combinerkinematik in der Ruheposition sich in dem dann nicht genutzten Bereich der Strahlengänge zwischen dem Optikmodul und der Combinerscheibe befindet und nur in der Arbeitsposition aus dem Bereich der Strahlengänge herausbewegt ist, wird nur ein geringer Bauraum benötigt, der insbesondere wenig Raum außerhalb der Strahlenbereiche benötigt. Dies ermöglicht es, auch ohne mehr Bauraum zu benötigen, die Combinerscheibe großflächig auszuführen. Damit kann auch die Öffnung in der Armaturentafel, durch die die Combinerscheibe aus dem Gehäuse in ihre Arbeitsposition bewegt wird, seitlich schmal und damit nur unwesentlich breiter als die Combinerscheibe ausgebildet werden.

Diese Öffnung kann in der Ruheposition auch noch durch eine Scheibe oder ein Deckglas abgedeckt werden. Damit wären auch die optischen Komponenten geschützt.

Die Combinerkinematik weist zwei Klappeinheiten auf, von denen jeweils eine auf einer Seite des Bereichs der Strahlengänge quer zur Fahrzeuglängsrichtung angeordnet ist, wobei jede Klappeinheit mindestens zwei Klapparme besitzt, wobei erste Klapparme der Klappeinheiten mit ihren einen Enden um zur Fahrzeuglängsachse parallele erste Klappachsen schwenkbar antreibbar sind, wobei sich die erste Achsen parallel zur Fahrzeuglängsrichtung außerhalb des Bereichs Strahlengangs zwischen dem Optikmodul und der Combinerscheibe erstrecken und wobei jeweils der erste Klapparm an seinem zweiten Ende über eine zur Fahrzeuglängsrichtung parallele Klappachse mit einem ersten Ende eines zweiten Klapparms der Klappeinheit schwenkbar verbunden ist, dessen zweites Ende um eine zur Fahrzeuglängsrictung parallele zweite Achse mit der Combinerscheibe schwenkbar verbunden ist.

In eingeklappter Ruhelage der Klapparme ragen die Klappeinheiten zueinander gerichtet in den Bereich der Strahlengänge, während sie in der aufgeklappten Arbeitsposition im Wesentlichen gestreckt nach oben gerichtet sind.

In einfacher, wenig Bauraum benötigender Weise kann zum Klappantrieb an den ersten Enden der ersten Klapparme jeweils ein Kulissenstein angeordnet sein, wobei die Kulissensteine jeweils in eine Kulisse an in Fahrzeuglängsrichtung festen, zueinander parallelen Kulissenträgern ragen, wobei sich die Kulissen in Fahrzeuglängsrichtung erstrecken und in Richtung zum Fahrzeugende hin eine Neigung zum Inneren des Gehäuses aufweisen und wobei die ersten Klapparme reversibel in Fahrzeuglängsrichtung bewegbar antreibbar sind.

Durch die Bewegung in Fahrzeuglängsrichtung bewirkt die Neigung der Kulissen ein Verschwenken der ersten Klapparme aus der Ruheposition in die Arbeitsposition und umgekehrt.

Um beim Aufklappen im Endbereich eine beschleunigte Bewegung zu erreichen, kann die Neigung der Kulissen in ihren zum Fahrzeugende hin gerichteten Endbereichen progressiv ausgebildet sein.

Ein einfacher und geringen Bauraum benötigender Bewegungsantrieb der ersten Klapparme in Fahrzeuglängsrichtung wird dadurch erreicht, dass die ersten Enden der ersten Klapparme Spindelmuttern aufweisen, die auf sich in Fahrzeuglängsrichtung erstreckenden, an den Kulissenträgern drehbar gelagerten Spindeln angeordnet sind, welche reversierbar drehbar antreibbar sind.

Dabei können die Spindeln gleichzeitig die Schwenkachsen bilden, auf denen die ersten Klapparme mit ihren Spindelmuttern schwenkbar gelagert sind.

Zur Stabilisierung können die Kulissenträger an ihren einen Enden durch eine Querstrebe zu einem Gestell verbunden sein.

Um die eingeklappte Combinerkinematik noch weiter in das Gehäuse absenken zu können, kann das Gestell um eine im Bereich der Querstrebe sich quer zur Fahrzeuglängsachsrichtung erstreckende Gestellachse schwenkbar antreibbar sein, wobei die Gestellachse an den in Fahrzeuglängsrichtung vorderen Endbereichen der Kulissenträger angeordnet ist.

Dabei kann das Gestell zwischen einer Ruheposition mit zum Gehäuseunteren geneigten Kulissenträgern und einer Arbeitsposition mit waagrecht sich erstreckenden Kulissenträgern schwenkbar antreibbar sein.

Zum Schwenkantrieb des oder der Kulissenträger kann auf der Außenseite zumindest eines der Kulissenträger eine reversierbar drehbar antreibbare Antriebsscheibe angeordnet sein, die um eine sich quer zur Fahrzeuglängsachsrichtung erstreckende Antriebsachse drehbar gelagert ist und an ihrer dem Kulissenträger zugewandten Seite eine spiralartige Antriebskulisse aufweist, in die ein Antriebskulissenstein des Kulissenträgers bewegbar geführt ist, wobei sich der Antriebskulissenstein in der Ruheposition im Bereich des radial inneren Endes und in der Arbeitsposition im Bereich des radial äußeren Endes der Antriebskulisse befindet.

Zum gleichmäßigen Antrieb beider Kulissenträger ist vorzugsweise auf den Außenseiten jedes Kulissenträgers eine Antriebsscheibe angeordnet, die um eine quer zur Fahrzeuglängsachsrichtung erstreckende gemeinsame Antriebsachse drehbar gelagert sind, wobei eine erste der Antriebsscheiben die reversierbar drehbar antreibbare Antriebsscheibe ist und die zweite Antriebsscheibe über eine Koppelwellenverbindung von der ersten Antriebsscheibe drehbar antreibbar ist.

Weist die reversierbar drehbar antreibbare Antriebsscheibe und ggf. die zweite Antriebsscheibe ein konzentisches Zahnsegment auf, in das ein auf der Spindel drehfest angeordnetes Ritzel eingreifbar ist, so sind durch die Antriebsscheibe bauteilsparend nicht nur die Kulissenträger schwenkbar sondern auch die Combinerkinematik in Fahrzeuglängsrichtung bewegbar antreibbar.

Vorzugsweise weisen dabei das Zahnsegment und das Ritzel eine Hypoidverzahnung auf.

Die erste Antriebsscheibe und die zweite Antriebsscheibe können jeweils eine Stirnradverzahnung aufweisen, in die jeweils ein drehfest auf einer drehbar gelagerten Koppelwelle angeordnetes Koppelzahnrad eingreift.

Zum Drehantrieb der ersten Antriebsscheibe kann die reversierbar drehbar antreibbare Antriebsscheibe einen Zahnkranz aufweisen, in die ein Antriebselement eines reversierbaren Antriebsmotors eingreift.

Vorzugsweise weist dabei das Antriebselement eine Schneckenwelle und der Zahnkranz eine Schrägverzahnung auf.

Ein Ausführungsbeispiel der Erfindung ist in der Zeichnung dargestellt und wird im Folgenden näher beschrieben. Es zeigen:
- Figur 1: eine perspektivische Darstellung einer Positioniereinrichtung in der Ruhestellung,
- Figur 2: eine perspektivische Darstellung der Positioniereinrichtung nach Figur 1 mit aus der Ruhestellung aufgerichteter Stellung der Combinerscheibe,
- Figur 3: eine perspektivische Darstellung der Positioniereinrichtung nach Figur 1 mit teilangehobener Stellung der Combinerscheibe,
- Figur 4: eine perspektivische Darstellung der Positioniereinrichtung nach Figur 1 mit vollangehobener Stellung vor Feinverstellungsposition der Combinerscheibe,
- Figur 5: eine perspektivische Darstellung der Positioniereinrichtung nach Figur 1 mit in Arbeitsposition angehobener feinverstellter Position der Combinerscheibe,

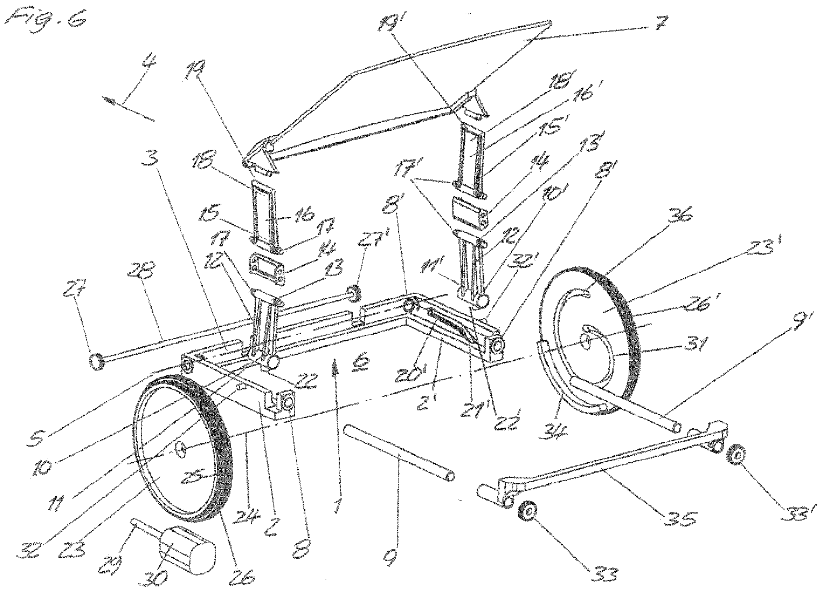

- Figur 6: einen perspektivische Explosionsdarstellung der Positioniereinrichtung nach Figur 1 mit in Arbeitsposition angehobener feinverstellter Position der Combinerscheibe,
- Figur 7: eine perspektivische Darstellung eines Kulissenträgers und eines ersten Klapparms der Positioniereinrichtung nach Figur 1.

Die in den Figuren dargestellte Positioniereinrichtung für eine Combinerscheibe 7 einer Head-Up-Anzeige in einem Fahrzeug weist ein als U-förmiger Rahmen ausgebildetes Gestell 1 auf, das aus zwei parallel im Abstand zueinander sich erstreckenden Kulissenträgern 2, 2' besteht, die an ihren einen Enden durch eine Querstrebe 3 miteinander verbunden sind.

Das Gestell 1 ist um eine Gestellachse 5 schwenkbar, die sich quer zur Fahrzeuglängsachsrichtung 4 im Bereich der Querstrebe 3 erstreckt.

Der von den Kulissenträgern 2, 2' und der Querstrebe 3 umschlossene Bereich ist der Bereich 6 der Strahlengänge, die von einer nicht dargestellten bildgebenden Einheit über ein Optikmodul in einem ebenfalls nicht dargestellten Gehäuse auf eine Combinerscheibe 7 führen.

Die Kulissenträger 2, 2' weisen an ihren beiden Enden Lager 8, 8' auf, in denen sich parallel zu den Kulissenträgern 2, 2' sich erstreckende Spindeln 9, 9' drehbar gelagert sind.

Auf den Spindeln 9, 9' sind Spindelmuttern 10, 10' angeordnet, die sich an ersten Enden 11, 11' von ersten Klapparmen 12, 12' befinden. Die ersten Klapparme 12, 12' erstrecken sich radial zu den Spindeln 9, 9' und sind an ihren zweiten Enden 13, 13' über Verbindungsstücke 14, 14' mit den ersten Enden 15, 15' zweiter Klapparme 16, 16' um zwei zu den Spindelmuttern 10, 10' parallele Klappachsen 17, 17' schwenkbar verbunden.

Die zweiten Enden 18, 18' der zweiten Klapparme 16, 16' sind wiederum an den Seitenbereichen der Combinerscheibe 7 um zu den Spindeln 9, 9' parallele Achsen 19, 19' schwenkbar angelenkt. Durch die Combinerscheibe 7 ist der Bereich 6 der Strahlengänge überdeckbar.

Im Bereich der Spindelmuttern 10, 10' weisen die Kulissenträger 2, 2' an ihren einander zugewandten Seiten Kulissen 20, 20' auf, die sich entlang der Längserstreckung der Kulissenträger 2, 2' erstrecken und in ihrem sich von der Querstrebe 3 entfernenden Verlauf zum Inneren des Gehäuses (nach unten) geneigt sind. In ihren der Querstrebe 3 entfernten Endbereich 21 weist die Neigung einen progressiven Verlauf auf. Die Kulisse 20 des Kulissenträgers 2 ist in den Abbildungen verdeckt.

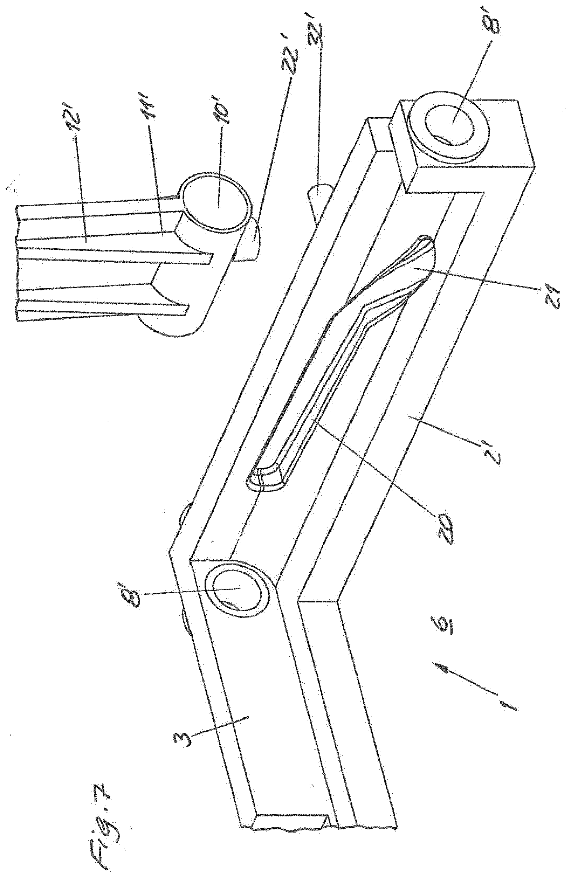

In die Kulissen 20, 20' ragen Kulissensteine 22, 22', die im Bereich der Spindelmuttern 10, 10' an den ersten Enden 11, 11' der ersten Klapparme 12, 12' angeordnet sind (Figur 7).

An den einander abgewandten Außenseiten der Kulissenträger 2, 2' sind jeweils radförmige Antriebsscheiben 23, 23' um eine sich parallel zur Gestellachse 5 sich erstreckende Antriebsachse 24 drehbar angeordnet.

Die Antriebsscheiben 23 weist an ihrem radial umlaufenden Umfang einen Zahnkranz 25 mit Schrägverzahnung und daneben einen Zahnkranz 26 mit Stirnverzahnung auf, während die Antriebsscheibe 23' nur mit einem Zahnkranz 26' mit Stirnverzahnung versehen ist, die der Stirnverzahnung des Zahnkranzes 26 entspricht.

In den Zahnkranz 25 mit Schrägverzahnung greift eine Schneckenwelle 29 eines reversierbaren Antriebsmotors 30 zum Drehantrieb der Antriebsscheibe 23 ein.

In die Zahnkränze 26, 26' mit Stirnverzahnungen greifen jeweils Koppelzahnräder 27, 27' ein, die auf einer drehbar gelagerten, sich parallel zur Gestellachse 5 erstreckenden Koppelwelle 28 angeordnet sind. Damit wird die Drehbewegung der Antriebsscheibe 23 auf die Antriebsscheibe 23' übertragen.

An ihren den Kulissenträgern 2, 2' zugewandten Stirnseiten weisen die Antriebsscheiben 23, 23' nutartig ausgebildete spiralartig verlaufende Antriebskulissen 31 auf, in die Antriebskulissensteine 32 eingreifen, die an den Außenseiten der Kulissenträger 2, 2' angeordnet sind.

An den der Querstrebe 3 entgegengesetzten Enden der Spindeln 9, 9' sind Ritzel 33, 33' angeordnet, die in an den einander zugewandten Stirnseiten der Antriebsscheiben 23, 23' konzentrisch zur Antriebsachse 24 angeordnete Zahnsegmente 34 eingreifbar sind.

Zur Stabilisierung sind die der Querstrebe 3 entgegengesetzten Enden der Kulissenträger 2, 2' durch einen Schlitten 35 miteinander verbunden.

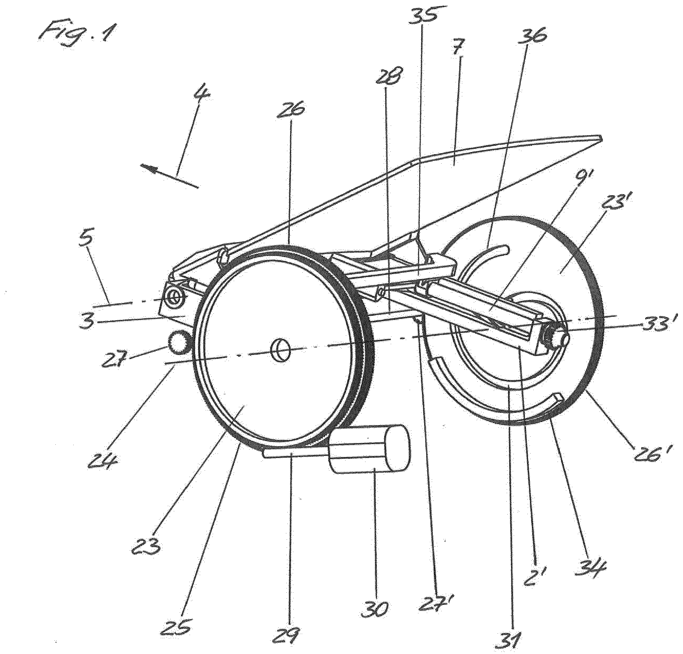

Figur 1 zeigt die Positioniereinrichtung in der Ruhestellung, in der sich die Combinerscheibe 7 innerhalb des nicht dargestellten Gehäuses befindet und die Klapparme 12, 12', 16, 16' zueinander gerichtet in den Bereich 6 der Strahlengänge ragen.

Wird nun die Antriebsscheibe 23 von dem Antriebsmotor 30 drehbar angetrieben und damit auch die Antriebsscheibe 23' drehbar angetrieben, bewegen sich die Antriebskulissensteine 32, 32' in den Antriebskulissen 31 aus deren radial inneren Bereichen in Richtung zu den radial äußeren Bereichen, wodurch die Kulissenträger 2, 2' aus ihrer nach unten geneigten Ruhelage bis in eine annähernd waagrechte Lage geschwenkt werden.

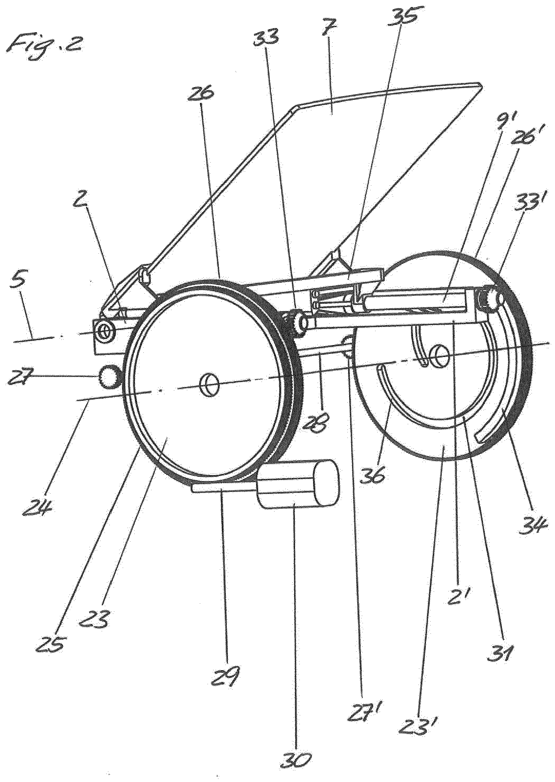

Ist die annähernd waagrechte Lage erreicht, gelangen auch die Ritzel 33, 33' an dem einen Ende des Zahnsegments 34 in Eingriff mit diesem (Figur 2).

Bei der weiteren Drehbewegung der Antriebsscheiben 23, 23' werden nun über die Ritzel 33, 33' auch die Spindeln 9, 9' drehbar angetrieben, so dass sich die Spindelmuttern 10, 10' aus ihrer der Querstrebe 3 nahen Lage zu den der Querstrebe 3 entfernten Lage hin bewegen.

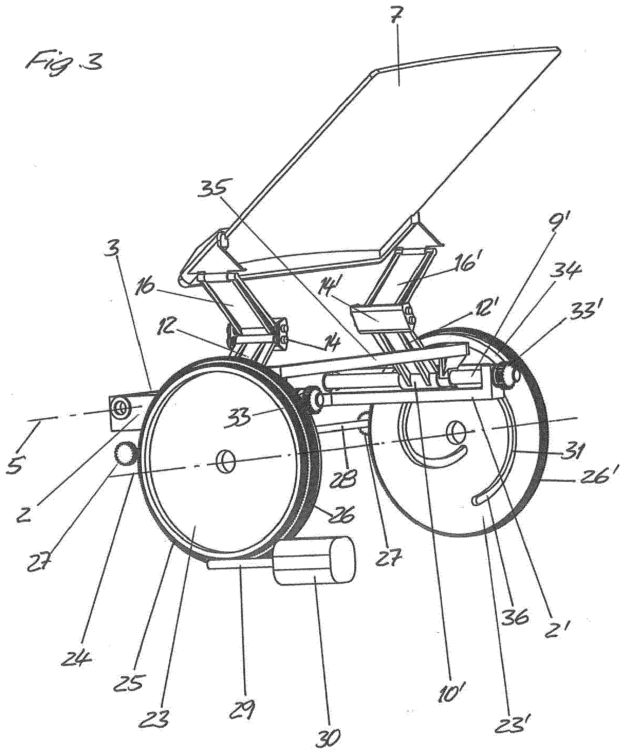

Die in die nutartigen Kulissen 20 eingreifenden Kulissensteine 22 bewegen sich in den Kulissen 20 und schwenken aufgrund der Neigung der Kulissen 20 die ersten Klapparme 12, 12' aus ihrer in den Bereich 6 ragenden Ruhelage in eine aufrechte Lage. Dabei werden zwangsweise auch die zweiten Klapparme 16, 16' in ihre aufrechte Lage geklappt, so dass nun der Bereich 6 frei für die Strahlengänge von dem Optikmodul zur Combinerscheibe 7 wird (Figur 3).

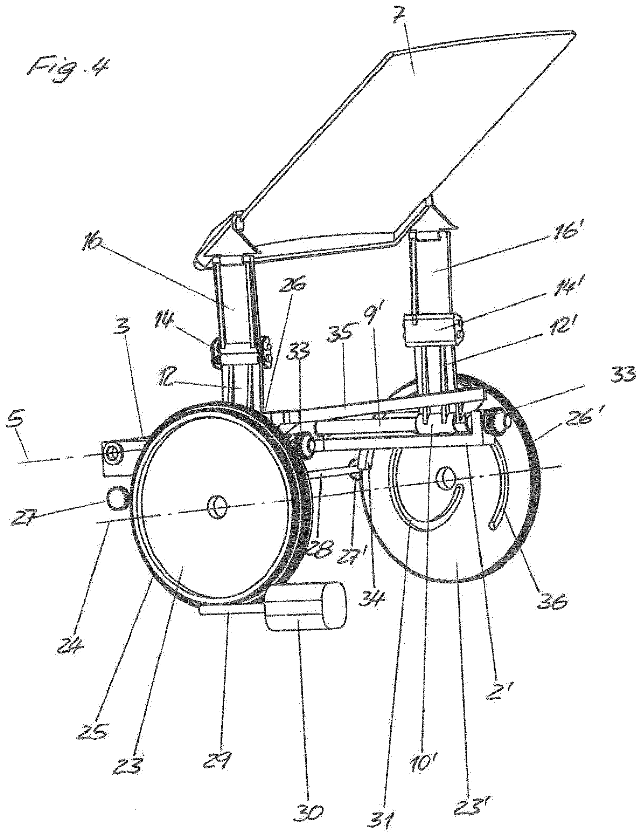

Haben die Klapparme 12, 12', 16, 16' ihre zueinander gestreckte Lage erreicht (Figur 4), haben auch die Ritzel 33, 33' das andere Ende des Zahnsegments 34 erreicht und kommen von diesem außer Eingriff.

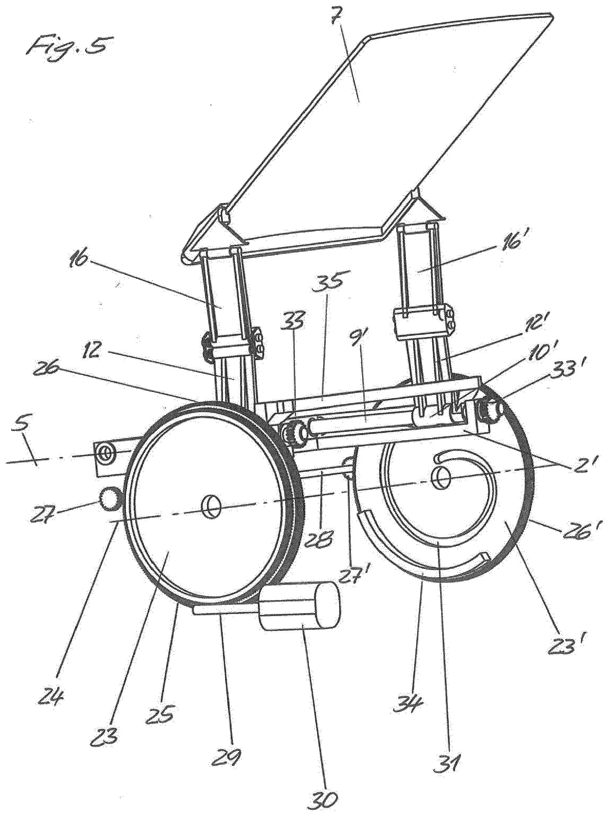

Die nun für die Antriebskulissensteine noch zur Verfügung stehenden radial äußeren Endbereiche 36 der Antriebskulissen 31 haben nur noch eine geringe Steigung. Innerhalb dieser Endbereiche 36 kann nun eine Feinverstellung der Neigung der Combinerscheibe 7 erfolgen, so dass sie genau auf die Position der Augen des jeweiligen Fahrers des Fahrzeugs gerichtet werden kann (Figur 5) und ihre Arbeitsposition erreicht hat.

Bei Drehrichtungsumkehr erfolgt ein umgekehrter Bewegungsablauf, bis wieder die Ruheposition erreicht ist.

## Patentansprüche

1. Positioniereinrichtung für eine Combinerscheibe (7) einer Head-Up-Anzeige eines Fahrzeugs, mit einem reversierbaren Drehantrieb, von dem eine Combinerkinematik antreibbar ist, durch die die Combinerscheibe (7) zwischen einer Ruheposition in einem Gehäuse und einer aus einer Öffnung des Gehäuses herausragenden Arbeitsposition bewegbar antreibbar ist, wobei in der Arbeitsposition Strahlengänge von einer bildgebenden Einheit und einem Optikmodul im Gehäuse auf die Combinerscheibe (7) zu führen, wobei die Combinerkinematik in der Ruheposition der Combinerscheibe (7) in den Bereich (6) der Strahlengänge zwischen dem Optikmodul und der Combinerscheibe (7) ragt und in der Arbeitsposition aus dem Bereich (7) der Strahlengänge herausbewegt ist, **dadurch gekennzeichnet, dass** die Combinerkinematik zwei Klappeinheiten aufweist, von denen jeweils eine auf einer Seite des Bereichs (6) der Strahlengänge quer zur Fahrzeuglängsrichtung (4) angeordnet ist, wobei jede Klappeinheit mindestens zwei Klapparme (12, 12', 16, 16') besitzt, wobei erste Klapparme (12, 12') der Klappeinheiten mit ihren einen Enden (11, 11') um zur Fahrzeuglängsachse (4) parallele erste Klappachsen schwenkbar antreibbar sind, wobei sich die ersten Klappachsen parallel zur Fahrzeuglängsrichtung (4) außerhalb des Bereichs (6) des Strahlengangs zwischen dem Optikmodul und der Combinerscheibe (7) erstrecken und wobei jeweils der erste Klapparm (12, 12') an seinem zweiten Ende (13, 13') über eine zur Fahrzeuglängsrichtung (4) parallele Klappachse (17, 17') mit einem ersten Ende (15, 15') eines zweiten Klapparms (16, 16') der Klappeinheit schwenkbar verbunden ist, dessen zweites Ende (18, 18') um eine zur Fahrzeuglängsrichtung (4) parallele zweite Achse (19, 19') mit der Combinerscheibe schwenkbar verbunden ist.

2. Positioniereinrichtung für eine Combinerscheibe nach Anspruch 1, **dadurch gekennzeichnet, dass** an den ersten Enden (11, 11') der ersten Klapparme (12, 12') jeweils ein Kulissenstein (22,22') angeordnet ist, wobei die Kulissensteine (22,22') jeweils in eine Kulisse (20) an in Fahrzeuglängsrichtung (4) festen, zueinander parallelen Kulissenträgern (2, 2') ragen, wobei sich die Kulissen (20) in Fahrzeuglängsrichtung (4) erstrecken und in Richtung zum Fahrzeugende hin eine Neigung zum Inneren des Gehäuses aufweisen und wobei die ersten Klapparme (12, 12') reversibel in Fahrzeuglängsrichtung bewegbar antreibbar sind.

3. Positioniereinrichtung für eine Combinerscheibe nach Anspruch 2, **dadurch gekennzeichnet, dass** die Neigung der Kulissen (20) in ihren zum Fahrzeugende hin gerichteten Endbereichen (21) progressiv ist.

4. Positioniereinrichtung für eine Combinerscheibe nach einem der Ansprüche 2 bis 3, **dadurch gekennzeichnet, dass** die ersten Enden (11, 11') der ersten Klapparme (12, 12') Spindelmuttern(10, 10') aufweisen, die auf sich in Fahrzeuglängsrichtung (4) erstreckenden, an den Kulissenträgern (2, 2') drehbar gelagerten Spindeln (9, 9') angeordnet sind, welche reversierbar drehbar antreibbar sind.

5. Positioniereinrichtung für eine Combinerscheibe nach einem der Ansprüche 2 bis 4, **dadurch gekennzeichnet, dass** die Kulissenträger (2, 2') an ihren einen Enden durch eine Querstrebe (3) zu einem Gestell (1) verbunden sind.

6. Positioniereinrichtung für eine Combinerscheibe nach Anspruch 5, **dadurch gekennzeichnet, dass** das Gestell (1) um eine im Bereich der Querstrebe (3) sich quer zur Fahrzeuglängsrichtung (4) erstreckende Gestellachse (5) schwenkbar antreibbar ist, wobei die Gestellachse (5) an den in Fahrzeuglängsrichtung (4) vorderen Endbereichen der Kulissenträger (2, 2') angeordnet ist.

7. Positioniereinrichtung für eine Combinerscheibe nach Anspruch 6, **dadurch gekennzeichnet, dass** das Gestell (1) zwischen einer Ruheposition mit zum Gehäuseunteren geneigten Kulissenträgern (2, 2') und einer Arbeitsposition mit waagrecht sich erstreckenden Kulissenträgern (2, 2') schwenkbar antreibbar ist.

8. Positioniereinrichtung für eine Combinerscheibe nach Anspruch 7, **dadurch gekennzeichnet, dass** auf der Außenseite zumindest eines der Kulissenträger (2, 2') eine reversierbar drehbar antreibbare Antriebsscheibe (23, 23') angeordnet ist, die um eine sich quer zur Fahrzeuglängsrichtung erstreckende Antriebsachse (24) drehbar gelagert ist und an ihrer dem Kulissenträger (2, 2') zugewandten Seite eine spiralartige Antriebskulisse (31) aufweist, in die ein Antriebskulissenstein (32, 32') des Kulissenträgers (2, 2') bewegbar geführt ist, wobei sich der Antriebskulissenstein (32, 32') in der Ruheposition im Bereich des radial inneren Endes und in der Arbeitsposition im Bereich des radial äußeren Endes der Antriebskulisse (31) befindet.

9. Positioniereinrichtung für eine Combinerscheibe nach Anspruch 8, **dadurch gekennzeichnet, dass** auf den Außenseiten jedes Kulissenträgers (2, 2') eine Antriebsscheibe (23, 23') angeordnet ist, die um eine quer zur Fahrzeuglängsrichtung (4) erstreckende gemeinsame Antriebsachse (24) drehbar gelagert sind, wobei eine erste der Antriebsscheiben (23) die reversierbar drehbar antreibbare Antriebsscheibe (23) ist und die zweite Antriebsscheibe (23') über eine Koppelwellenverbindung von der ersten Antriebsscheibe (23) drehbar antreibbar ist.

10. Positioniereinrichtung für eine Combinerscheibe nach einem der Ansprüche 8 bis 9, **dadurch gekennzeichnet, dass** die reversierbar drehbar antreibbare Antriebsscheibe (23) und ggf. die zweite Antriebsscheibe (23') ein konzentrisches Zahnsegment (34) aufweist, in das ein auf der Spindel (9, 9') drehfest angeordnetes Ritzel (33, 33') eingreifbar ist.

11. Positioniereinrichtung für eine Combinerscheibe nach Anspruch 10, **dadurch gekennzeichnet, dass** das Zahnsegment (34) und das Ritzel (33, 33') eine Hypoidverzahnung aufweisen.

12. Positioniereinrichtung für eine Combinerscheibe nach einem der Ansprüche 8 bis 11, **dadurch gekennzeichnet, dass** die erste Antriebsscheibe (23) und die zweite Antriebsscheibe (23') jeweils eine Stirnradverzahnung (26, 26') aufweisen, in die jeweils ein drehfest auf einer drehbar gelagerten Koppelwelle (28) angeordnetes Koppelzahnrad (27, 27') eingreift.

13. Positioniereinrichtung für eine Combinerscheibe nach einem der Ansprüche 8 und 12, **dadurch gekennzeichnet, dass** die reversierbar drehbar antreibbare Antriebsscheibe (23) einen Zahnkranz (25) aufweist, in die ein Antriebselement eines reversierbaren Antriebsmotors (30) eingreift.

14. Positioniereinrichtung für eine Combinerscheibe nach Anspruch 13, **dadurch gekennzeichnet, dass** das Antriebselement eine Schneckenwelle (29) ist und der Zahnkranz (25) eine Schrägverzahnung aufweist.

## Claims

1. Positioning device for a combiner screen (7) of a head-up display of a vehicle, having a reversible rotary drive, by which a combiner kinematic system can be driven, by way of which the combiner screen (7) can be driven movably between a rest position in a housing and a working position which protrudes out of an opening of the housing, beam paths leading in the working position from an imaging unit and an optics module in the housing towards the combiner screen (7), the combiner kinematic system protruding, in the rest position of the combiner screen (7), into the region (6) of the beam paths between the optics module and the combiner screen (7) and being moved out of the region (7) of the beam paths in the working position, **characterized in that** the combiner kinematic system has two flap units, of which in each case one is arranged on one side of the region (6) of the beam paths transversely with respect to the vehicle longitudinal direction (4), each flat unit having at least two flap arms (12, 12', 16, 16'), it being possible for first flap arms (12, 12') of the flap units to be driven by way of their one ends (11, 11') such that they can be pivoted about first flap pins which are parallel to the vehicle longitudinal pin (4), the first flap pins extending parallel to the vehicle longitudinal direction (4) outside the region (6) of the beam path between the optics module and the combiner screen (7), and in each case the first flap arm (12, 12') being connected at its second end (13, 13') pivotably to a first end (15, 15') of the second flap arm (16, 16') of the flap unit via a flap pin (17, 17') which is parallel to the vehicle longitudinal direction (4), the second end (18, 18') of which second flap arm (16, 16') of the flap unit is connected to the combiner screen such that it can be pivoted about a second pin (19, 19') which is parallel to the vehicle longitudinal direction (4).

2. Positioning device for a combiner screen according to Claim 1, **characterized in that** in each case one sliding block (22, 22') is arranged at the first ends (11, 11') of the first flap arms (12, 12'), the sliding blocks (22, 22') protruding in each case into a slotted guide (20) on the slotted guide carriers (2, 2') which are fixed in the vehicle longitudinal direction (4) and are parallel to one another, the slotted guides (20) extending in the vehicle longitudinal direction (4) and having an inclination towards the interior of the housing in the direction of the vehicle end, and it being possible for the first flap arms (12, 12') to be driven such that they can be moved reversibly in the vehicle longitudinal direction.

3. Positioning device for a combiner screen according to Claim 2, **characterized in that** the inclination of the slotted guides (20) is progressive in their end regions (21) which are directed towards the vehicle end.

4. Positioning device for a combiner screen according to either of Claims 2 and 3, **characterized in that** the first ends (11, 11') of the first flap arms (12, 12') have spindle nuts (10, 10') which are arranged on spindles (9, 9') which extend in the vehicle longitudinal direction (4), are mounted rotatably on the slotted guide carriers (2, 2'), and can be driven such that they can be rotated in a reversible manner.

5. Positioning device for a combiner screen according to one of Claims 2 to 4, **characterized in that** the slotted guide carriers (2, 2') are connected at their one ends to a frame (1) by way of a transverse strut (3).

6. Positioning device for a combiner screen according to Claim 5, **characterized in that** the frame (1) can be driven such that it can be pivoted about a frame axis (5) which extends transversely with respect to the vehicle longitudinal direction (4) in the region of the transverse strut (3), the frame axis (5) being arranged on the end regions of the slotted guide carriers (2, 2'), which end regions are at the front in the vehicle longitudinal direction (4).

7. Positioning device for a combiner screen according to Claim 6, **characterized in that** the frame (1) can be driven such that it can be pivoted between a rest position with slotted guide carriers (2, 2') which are inclined with respect to the bottom of the housing and a working position with horizontally extending slotted guide carriers (2, 2').

8. Positioning device for a combiner screen according to Claim 7, **characterized in that** a drive disc (23, 23') which can be driven such that it can be rotated in a reversible manner is arranged on the outer side of at least one of the slotted guide carriers (2, 2'), which drive disc (23, 23') is mounted such that it can be rotated about a drive axis (24), which extends transversely with respect to the vehicle longitudinal direction, and has a spiral drive slotted guide (31) on its side which faces the slotted guide carrier (2, 2'), in which spiral drive slotted guide (31) a drive sliding block (32, 32') of the slotted guide carrier (2, 2') is guided movably, the drive sliding block (32, 32') being situated in the region of the radial inner end in the rest position and being situated in the region of the radially outer end of the drive slotted guide (31) in the working position.

9. Positioning device for a combiner screen according to Claim 8, **characterized in that** a drive disc (23, 23') is arranged on the outer sides of each slotted guide carrier (2, 2'), which drive discs (23, 23') are mounted such that they can be rotated about a common drive axis (24) which extends transversely with respect to the vehicle longitudinal direction (4), a first one of the drive discs (23) being the drive disc (23) which can be driven such that it can be rotated in a reversible manner, and it being possible for the second drive disc (23') to be driven rotatably by the first drive disc (23) via a coupler shaft connection.

10. Positioning device for a combiner screen according to either of Claims 8 and 9, **characterized in that** the drive disc (23) which can be driven such that it can be rotated in a reversible manner and possibly the second drive disc (23') have/has a concentric tooth segment (34), into which a pinion (33, 33') which is arranged fixedly on the spindle (9, 9') so as to rotate with it can engage.

11. Positioning device for a combiner screen according to Claim 10, **characterized in that** the tooth segment (34) and the pinion (33, 33') have a hypoid toothing system.

12. Positioning device for a combiner screen according to one of Claims 8 to 11, **characterized in that** the first drive disc (23) and the second drive disc (23') in each case have a spur gear toothing system (26, 26'), into which in each case one coupler gearwheel (27, 27') which is arranged fixedly on a rotatably mounted coupler shaft (28) so as to rotate with it engages.

13. Positioning device for a combiner screen according to either of Claims 8 and 12, **characterized in that** the drive disc (23) which can be driven such that it can be rotated in a reversible manner has a toothed rim (25), into which a drive element of a reversible drive motor (30) engages.

14. Positioning device for a combiner screen according to Claim 13, **characterized in that** the drive element is a worm shaft (29), and the toothed rim (25) has a helical toothing system.

## Revendications

1. Dispositif de positionnement pour un disque combineur (7) d'un afficheur tête haute d'un véhicule, comprenant un entraînement rotatif réversible par lequel peut être entraînée une cinématique de combineur, par le biais de laquelle le disque combineur (7) peut être entraîné avec mobilité entre une position de repos dans un boîtier et une position de travail faisant saillie hors d'une ouverture du boîtier, dans la position de travail, les trajets de rayons menant d'une unité d'imagerie et d'un module optique dans le boîtier sur le disque combineur (7), la cinématique de combineur, dans la position de repos du disque combineur (7), faisant saillie dans la zone (6) des trajets de rayons entre le module optique et le disque combineur (7) et, dans la position de travail, étant déplacée hors de la zone (7) des trajets de rayons, **caractérisé en ce que** la cinématique de combineur possède deux unités à clapet parmi lesquelles une est respectivement disposée sur un côté de la zone (6) des trajets de rayons transversalement par rapport au sens longitudinal du véhicule (4), chaque unité à clapet possédant au moins deux bras de clapet (12, 12', 16, 16'), des premiers bras de clapet (12, 12') des unités à clapet pouvant être entraînés par l'une de leurs extrémités (11, 11') en pivotement autour de premiers axes de clapet parallèles à l'axe longitudinal du véhicule (4), les premiers axes de clapet s'étendant parallèlement au sens longitudinal du véhicule (4) en-dehors de la zone (6) du trajet de rayons entre le module optique et le disque combineur (7) et le premier bras de clapet (12, 12') étant respectivement relié en pivotement par sa deuxième extrémité (13, 13'), par le biais d'un axe de clapet (17, 17') parallèle au sens longitudinal du véhicule (4), à une première extrémité (15, 15') d'un deuxième bras de clapet (16, 16') de l'unité à clapet, dont la deuxième extrémité (18, 18') est reliée au disque combineur de manière à pouvoir pivoter autour d'un deuxième axe (19, 19') parallèle au sens longitudinal du véhicule (4).

2. Dispositif de positionnement pour un disque combineur selon la revendication 1, **caractérisé en ce qu'**un coulisseau (22, 22') est respectivement disposé aux premières extrémités (11, 11') des premiers bras de clapet (12, 12'), les coulisseaux (22, 22') faisant respectivement saillie dans une coulisse (20) au niveau de porte-coulisses (2, 2') fixes mutuellement parallèles dans le sens longitudinal du véhicule (4), les coulisses (20) s'étendant dans le sens longitudinal du véhicule (4) et possédant en direction de l'extrémité arrière du véhicule une inclinaison vers l'intérieur du boîtier et les premiers bras de clapet (12, 12') pouvant être entraînés avec mobilité de manière réversible dans le sens longitudinal du véhicule.

3. Dispositif de positionnement pour un disque combineur selon la revendication 2, **caractérisé en ce que** l'inclinaison des coulisses (20) dans leurs zones d'extrémité (21) dirigées vers l'extrémité du véhicule est progressive.

4. Dispositif de positionnement pour un disque combineur selon l'une des revendications 2 à 3, **caractérisé en ce que** les premières extrémités (11, 11') des premiers bras de clapet (12, 12') possèdent des écrous de broche (10, 10') qui sont disposés sur des broches (9, 9') montées à rotation sur les porte-coulisses (2, 2') et s'étendant dans le sens longitudinal du véhicule (4), lesquelles peuvent être entraînés en rotation de manière réversible.

5. Dispositif de positionnement pour un disque combineur selon l'une des revendications 2 à 4, **caractérisé en ce que** les porte-coulisses (2, 2') sont reliés au niveau de leurs extrémités à un bâti (1) par le biais d'un élément jointif transversal (3).

6. Dispositif de positionnement pour un disque combineur selon la revendication 5, **caractérisé en ce que** le bâti (1) peut être entraîné en pivotement autour d'un axe de bâti (5) qui s'étend transversalement au sens longitudinal du véhicule (4) dans la zone de l'élément jointif transversal (3), l'axe de bâti (5) étant disposé au niveau des zones d'extrémité avant des porte-coulisses (2, 2') dans le sens longitudinal du véhicule (4).

7. Dispositif de positionnement pour un disque combineur selon la revendication 6, **caractérisé en ce que** le bâti (1) peut être entraîné en pivotement entre une position de repos avec les porte-coulisses (2, 2') inclinés vers le dessous du boîtier et une position de travail avec les porte-coulisses (2, 2') s'étendant horizontalement.

8. Dispositif de positionnement pour un disque combineur selon la revendication 7, **caractérisé en ce qu'**un disque d'entraînement (23, 23') pouvant être entraîné en rotation de manière réversible est disposé sur le côté extérieur d'au moins un porte-coulisse (2, 2'), lequel est monté à rotation autour d'un axe d'entraînement (24) qui s'étend transversalement par rapport au sens longitudinal du véhicule et possède au niveau de son côté faisant face au porte-coulisse (2, 2') une coulisse d'entraînement (31) de type spirale dans laquelle un coulisseau d'entraînement (32, 32') du porte-coulisse (2, 2') est guidé avec mobilité, le coulisseau d'entraînement (32, 32'), dans la position de repos, se trouvant dans la zone de l'extrémité intérieure radiale et, dans la position de travail, dans la zone de l'extrémité extérieure radiale de la coulisse d'entraînement (31).

9. Dispositif de positionnement pour un disque combineur selon la revendication 8, **caractérisé en ce qu'**un disque d'entraînement (23, 23') est disposé sur les côtés extérieurs de chaque porte-coulisse (2, 2'), lequel est monté à rotation autour d'un axe d'entraînement (24) qui s'étend transversalement par rapport au sens longitudinal du véhicule (4), un premier des disques d'entraînement (23) étant le disque d'entraînement (23) pouvant être entraîné en rotation de manière réversible et le deuxième disque d'entraînement (23') pouvant être entraîné en rotation par le premier disque d'entraînement (23) par le biais d'une liaison par arbre d'accouplement.

10. Dispositif de positionnement pour un disque combineur selon l'une des revendications 8 à 9, **caractérisé en ce que** le disque d'entraînement (23) pouvant être entraîné en rotation de manière réversible et éventuellement le deuxième disque d'entraînement (23') possèdent un segment denté (34) concentrique dans lequel peut venir en prise un pignon (33, 33') monté en rotation solidaire sur la broche (9, 9').

11. Dispositif de positionnement pour un disque combineur selon la revendication 10, **caractérisé en ce que** le segment denté (34) et le pignon (33, 33') possèdent une denture hélicoïdale.

12. Dispositif de positionnement pour un disque combineur selon l'une des revendications 8 à 11, **caractérisé en ce que** le premier disque d'entraînement (23) et le deuxième disque d'entraînement (23') possèdent respectivement une denture de pignon droit (26, 26') dans laquelle vient respectivement en prise une roue dentée d'accouplement (27, 27') montée en rotation solidaire sur un arbre d'accouplement (28) monté à rotation.

13. Dispositif de positionnement pour un disque combineur selon l'une des revendications 8 et 12, **caractérisé en ce que** le disque d'entraînement (23) pouvant être entraîné en rotation de manière réversible possède une couronne dentée (25) dans laquelle vient en prise dans un élément d'entraînement d'un moteur d'entraînement (30) réversible.

14. Dispositif de positionnement pour un disque combineur selon la revendication 13, **caractérisé en ce que** l'élément d'entraînement est un arbre à vis sans fin (29) et la couronne dentée (25) possède une denture oblique.
